# FASCICULE DE BREVET EUROPEEN

(11) **EP 3 223 583 B1**
(45) Date de publication et mention de la délivrance du brevet: **18.12.2019**
(21) Numéro de dépôt: 17160934.0
(22) Date de dépôt: 14.03.2017
(51) Int. Cl.: H05B 1/02, H05B 3/54, B60S 1/38

(54) **ELÉMENT CHAUFFANT POUR BALAI D'ESSUIE-GLACE D'UN VÉHICULE**
HEIZELEMENT FÜR SCHEIBENWISCHER EINES FAHRZEUGS
HEATING ELEMENT FOR A WINDSCREEN-WIPER BLADE OF A VEHICLE

(30) Priorité: 21.03.2016 FR 1652404
(43) Date de publication de la demande: 27.09.2017
(73) Titulaire: Valeo Systèmes d'Essuyage, 78322 Le Mesnil Saint Denis (FR)
(72) Inventeur: CAILLOT, Gérald, 78322 LA VERRIERE (FR); JARASSON, Jean-Michel, 78322 LA VERRIERE (FR); IZABEL, Vincent, 78322 LA VERRIERE (FR)
(74) Mandataire: Callu-Danseux, Violaine

(56) Documents cités:
- EP-A1- 2 876 005
- DE-A1- 10 239 494
- FR-A1- 3 023 521
- US-A1- 2014 305 454

## Description

La présente invention concerne un élément chauffant pour balai d'essuie-glace de véhicule, en particulier automobile, et un balai d'essuie-glace de véhicule comportant cet élément.

Il est connu de chauffer un balai d'essuie-glace de véhicule automobile, en particulier pour le dégivrer en hiver. Dans le cas où ce balai est équipé de canaux internes de distribution de liquide lave-glace, le chauffage du balai permet en outre de chauffer le liquide avant sa pulvérisation sur le pare-brise du véhicule, ce qui facilite le dégivrage du pare-brise et peut éviter ainsi l'utilisation d'une raclette à givre manuelle.

Typiquement, un balai d'essuie-glace du type « balai plat » comprend un corps longitudinal portant une lame d'essuyage, en général en caoutchouc, destinée à frotter contre le pare-brise du véhicule pour évacuer de l'eau en l'amenant en dehors du champ de vision du conducteur. Le balai comporte en outre au moins une vertèbre longitudinale qui confère un cintrage à la lame d'essuyage, de manière à favoriser l'application de cette lame sur le pare-brise. Le balai est porté par un bras qui est entraîné par un moteur dans un mouvement de va-et-vient angulaire. Les moyens de liaison du balai au bras comprennent en général un connecteur qui est solidaire du corps et un adaptateur qui est articulé sur le corps et fixé à une extrémité du bras.

Dans la technique actuelle, les moyens de chauffage d'un balai d'essuie-glace comprennent en général un conducteur électrique chauffant, et éventuellement une résistance de protection comme illustré par exemple dans le document FR 3 023 521 A1.

On a déjà proposé d'équiper la vertèbre de cintrage d'un balai avec des moyens de chauffage, ces moyens de chauffage se présentant sous la forme d'un film qui est rapporté et collé sur la vertèbre et qui inclut un circuit ou une piste d'un conducteur électrique chauffant. Dans la technique actuelle, comme illustré par exemple dans le document EP 2 876 005 A1, le conducteur du circuit forme une boucle dont les extrémités sont reliées à des bornes d'alimentation électrique.

Pour un véhicule haut de gamme, le pilotage et la protection de la fonction chauffage d'un balai d'essuie-glace se fait en général directement par l'électronique et le circuit électrique du véhicule. Ce pilotage nécessite une intégration spécifique en amont pour la définition de l'architecture électrique du véhicule et engendre donc un certain coût.

Pour les véhicules de gamme moyenne ou inférieure, certains clients ne souhaitent pas modifier leur architecture et demande une intégration de la protection directement dans le balai chauffant, de manière à ne pas affecter les autres fonctions du véhicule en mode dégradé de la fonction (mauvaise information, défaillance du capteur de température extérieure ou de la vitesse du véhicule, par exemple).

De manière générale, la fonction chauffage se déclenche en-deçà d'une température extérieure de +5°C, pour assurer un dégivrage global du balai, que ce soit des canaux de distribution, des moyens de liaison du balai au bras, voire de la lame d'essuyage en contact avec le pare-brise. Dans un mode dégradé (par exemple, un capteur de température extérieure ou de vitesse de véhicule défaillant - par exemple le véhicule est à l'arrêt, mais le capteur dit que le véhicule est en mouvement), l'effet serait un chauffage permanent des balais au-delà de +5°C, potentiellement en plein été avec des températures ambiantes supérieures à +30°C, avec un risque potentiel pouvant entraîner un point chaud, un court-circuit, une dégradation physique du balai et dans le pire des cas un départ de feu.

L'invention propose une solution simple, efficace et économique à ce problème de la technique antérieure.

L'invention propose un élément chauffant pour balai d'essuie-glace d'un véhicule, en particulier automobile, comprenant un circuit d'un conducteur électrique chauffant et un support de ce circuit, le circuit comportant au moins une boucle dont les extrémités sont reliées à des bornes d'alimentation électrique, caractérisé en ce que ladite au moins une boucle comprend au moins une portion fusible dont au moins l'un des critères parmi la section et le matériau du conducteur de cette boucle est différent de celui ou de ceux du conducteur du reste de la boucle.

Dans l'optique de préserver le circuit électrique et électronique du véhicule, d'éviter une dégradation du balai et donc de la fonction essuyage, essentielle pour le client, l'invention propose d'intégrer à l'élément chauffant du balai une fonction fusible permettant d'éviter les risques cités ci-dessus. Dans le cas où la fonction fusible de l'élément chauffant s'activerait, le balai perdrait sa fonction chauffage, qui reste optionnelle, et conserverait sa fonction essuyage, qui est, elle, réglementaire. Cette perte de fonction peut être temporaire ou définitive.

L'avantage de la solution est sa compacité et facilité d'intégration, par rapport à d'autres solutions de protection thermique en particulier réversibles, par exemple bi-lame, etc., qui peuvent nécessiter des opérations complexes par exemple de brasage.

Selon un mode de réalisation de l'invention, la fonction fusible est réalisée par une modification, et en particulier une réduction, de la section du conducteur (tel que d'une piste chauffante). Une restriction de la section d'un conducteur crée une portion fusible qui est plus sensible en cas de surchauffe, et serait destinée à céder, ce qui rendrait inactive la fonction chauffage du balai.

Dans une variante, la fonction fusible est réalisée au moyen d'un matériau différent du reste de la boucle, qui est en général un métal ou un alliage métallique. Les différents modes et variantes de l'invention sont naturellement combinables.

L'élément chauffant selon l'invention peut comprendre une ou plusieurs des caractéristiques suivantes, prises isolément les unes des autres ou en combinaison les unes avec les autres :
- ladite au moins une portion fusible a au moins une dimension transversale, telle qu'une largeur et/ou une épaisseur, qui est différente de celle ou de celles du conducteur du reste de la boucle,
- ladite au moins une portion fusible est réalisée dans un matériau destiné à fondre lorsqu'il est soumis à une température prédéterminée,
- ladite au moins une portion fusible est réalisée dans un matériau dont la résistance varie, et en particulier augmente, en fonction de la température à laquelle il est soumis ; sa résistance peut augmenter lors la température augmente,
- au moins ledit reste de la boucle est réalisé en métal tel qu'en cuivre ou en alliage cuivre-nickel, en laiton (Brass - CuZn), en aluminium, etc.,
- le support a une forme allongée et comprend une surface longitudinale sensiblement plane, lesdites bornes étant situées sur cette surface et à distance des extrémités longitudinales du support,
- les bornes sont situées dans une zone sensiblement médiane du support, qui s'étend par exemple de 30 à 70% de sa longueur, mesurée depuis l'une de ses extrémités longitudinales,
- l'élément chauffant comprend une première boucle qui s'étend depuis les bornes vers une des extrémités longitudinales du support, et une seconde boucle qui s'étend depuis les bornes vers l'extrémité opposée du support ; en variante, il pourrait n'y avoir qu'une seule boucle,
- au moins l'une des boucles a une forme générale en U ou en W,
- au moins l'une des boucles comprend des ondulations, et
- le support est une vertèbre de cintrage du balai d'essuie-glace.

La présente invention concerne également un balai d'essuie-glace pour un véhicule, en particulier automobile, comportant un élément chauffant tel que décrit ci-dessus. De préférence, l'élément chauffant forme une vertèbre de cintrage.

Le balai peut comprendre des moyens de connexion à un bras d'entraînement du balai. Ces moyens de connexion peuvent comporter des moyens de raccordement électrique aux bornes du circuit de l'élément chauffant.

L'invention sera mieux comprise et d'autres détails, caractéristiques et avantages de l'invention apparaîtront à la lecture de la description suivante faite à titre d'exemple non limitatif et en référence aux dessins annexés, dans lesquels :
- la figure 1 est une vue en perspective éclatée d'un balai d'essuie-glace de véhicule automobile,
- la figure 2 est une vue schématique d'un élément chauffant selon l'invention, et
- la figure 3 est une vue schématique d'une variante de réalisation d'un élément chauffant selon l'invention.

Il faut noter que les figures exposent l'invention de manière détaillée pour mettre en œuvre l'invention, lesdites figures pouvant bien entendu servir à mieux définir l'invention le cas échéant.

Dans la description qui suit, les dénominations longitudinales ou latérales se réfèrent à l'orientation du balai d'essuie-glace selon l'invention. La direction longitudinale correspond à l'axe principal du balai dans lequel il s'étend, alors que les orientations latérales correspondent à des droites concourantes, c'est-à-dire qui croisent la direction longitudinale, notamment perpendiculaires à l'axe longitudinal du balai dans son plan de rotation. Pour les directions longitudinales, les dénominations haute ou basse s'apprécient par rapport au point de fixation du balai sur le bras porte-balai, la dénomination intérieure correspondant à la partie où le bras et un demi-balai s'étendent.

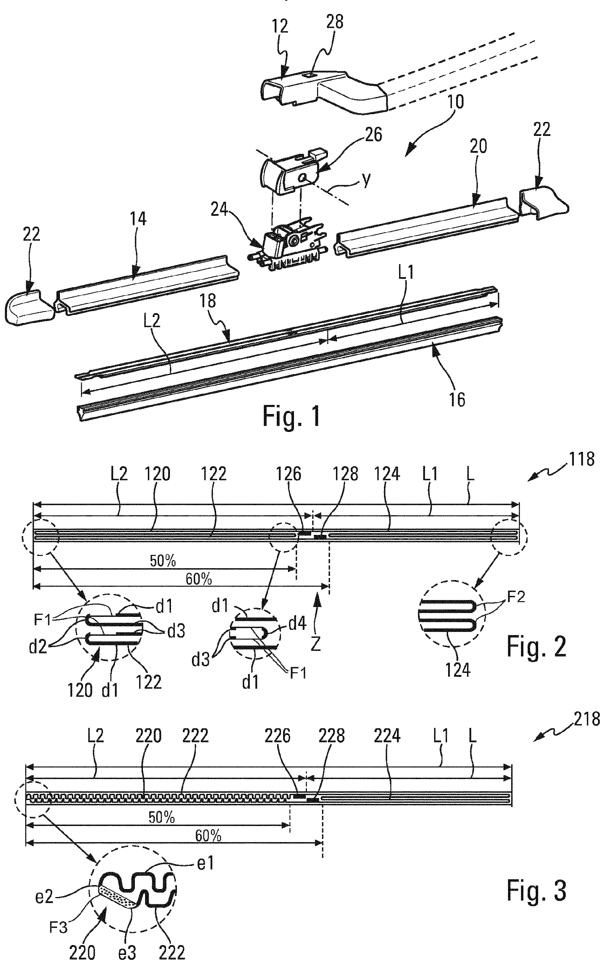

Il est illustré à la figure 1 un balai d'essuie-glace 10 d'un pare-brise de véhicule automobile et un bras 12 d'entraînement de ce balai 10, ce bras 12 étant partiellement représenté et destiné à être entraîné par un moteur pour que le balai suive un mouvement angulaire de va-et-vient permettant d'évacuer l'eau et éventuellement d'autres éléments indésirables recouvrant le pare-brise.

Le balai 10 comprend ici un corps longitudinal 14, une lame d'essuyage 16, en général en caoutchouc, et au moins une vertèbre 18 qui confère un cintrage à la lame 16 de manière à favoriser l'application de cette lame sur le pare-brise.

Le corps 14 du balai 10 comporte un déflecteur supérieur 20 destiné à améliorer le fonctionnement du balai, le but de ce déflecteur 20 étant d'améliorer le plaquage du balai sur le pare-brise et donc la performance aérodynamique du système.

Le balai 10 comprend en outre des embouts ou agrafes d'accrochage 22 de la lame 16 et de la vertèbre 18 sur le corps, ces agrafes 22 étant situées à chacune des extrémités longitudinales du corps 14.

Le corps 14 du balai est ici réalisé en deux parties indépendantes qui sont disposées sensiblement bout à bout et raccordées l'une à l'autre par un connecteur 24 intermédiaire.

Pour assurer son montage sur le bras 12, le balai 10 comprend un adaptateur 26 monté sur le connecteur 24 et permettant une articulation du balai 10 par rapport au bras 12. L'articulation du balai 10 par rapport au bras 12 est une articulation selon un mouvement de rotation autour d'un axe de rotation Y perpendiculaire à l'axe longitudinal du balai 10. Le balai 10 doit en effet présenter au moins un degré de liberté en rotation par rapport au bras 12, et plus spécifiquement par rapport à une pièce terminale 28 du bras 12, pour permettre au balai 10 de suivre la courbure du pare-brise.

L'invention concerne notamment un balai d'essuie-glace du type comportant un élément chauffant, cet élément chauffant comportant un circuit ou une piste d'un conducteur électrique chauffant et un support de ce circuit.

Selon un mode de réalisation de l'invention, le support est une vertèbre de cintrage du balai d'essuie-glace. Typiquement, une vertèbre de cintrage est métallique et a une forme allongée. Une vertèbre a en général en section une forme sensiblement rectangulaire et comprend deux surfaces planes sensiblement parallèles respectivement supérieure et inférieure.

Les figures 2 et 3 représentent deux variantes de réalisation de l'invention. Chacune de ces figures montre une vertèbre 118, 218 dont une des surfaces planes précitées est recouverte d'un circuit 120, 220 d'un conducteur électrique chauffant.

Le conducteur est en général en acier inoxydable ou en alliage à base de cuivre, nickel, aluminium, etc. (cupro, laiton, etc.).

Dans les exemples représentés, chaque circuit 120, 220 comprend deux boucles 122, 124 (figure 2), 222, 224 (figure 3) et deux bornes 126, 128 (figure 2), 226, 228 (figure 3) d'alimentation électrique de ces boucles. Pour cela, les deux extrémités de chaque boucle 122, 124, 222, 224 sont reliées respectivement aux deux bornes 126, 128, 226, 228. Plus précisément, la borne positive 126, 226 est reliée à une première extrémité de chaque boucle 122, 124, 222, 224 et la borne négative 128, 228 est reliée à l'extrémité opposée de chaque boucle.

En variante, chaque circuit peut comprendre une seule boucle. Dans ce cas, la borne positive est reliée à une boucle qui va jusqu'à une extrémité du circuit de chauffage, puis revient et va jusqu'à l'autre extrémité et revient sur la borne négative. Dans le cas précité d'un circuit de chauffage à deux boucles parallèles, il y a une boucle en bas et une en haut, et chacune est reliée à la borne positive et la borne négative

Comme on le voit sur les figures 2 et 3, la vertèbre 118, 218 a une longueur L et les bornes 126, 128, 226, 228 sont situées à distance des extrémités longitudinales de la vertèbre, et dans une zone Z sensiblement médiane de cette vertèbre. Ces bornes sont ici situées dans une zone Z s'étendant entre 50 et 60% environ de la longueur de la vertèbre, mesurée depuis une extrémité longitudinale de celle-ci (et donc entre 40 et 50% environ, mesurée depuis l'extrémité opposée de la vertèbre).

Cette zone Z peut correspondre à la position du connecteur du balai d'essuie-glace sur la vertèbre 118, 218. En effet, le connecteur peut comprendre des moyens de raccordement électrique destinés à venir au contact des bornes 126, 128, 226, 228 du circuit de la vertèbre en position de montage. En variante, le connecteur peut être centré sur la vertèbre alors que la connexion électrique entre les bornes et les moyens de raccordement est décentrée (pour des questions d'encombrement par exemple).

La boucle 122, 222 s'étend sur une première partie longitudinale de longueur L1 de la vertèbre 118, 228, entre les bornes et l'extrémité libre de cette partie longitudinale. La boucle 124, 224 s'étend sur la seconde partie longitudinale de longueur L2 de la vertèbre 118, 228, entre les bornes et l'extrémité libre de cette partie longitudinale.

Les boucles 122, 124 et 224 ont ici une forme en W et comprennent deux lignes droites d1 longeant respectivement les bords longitudinaux de la vertèbre, parallèlement à ceux-ci, ces lignes d1 comportant des premières extrémités qui sont reliées respectivement aux bornes 126, 128, 226, 228, et des extrémités opposées d2 qui sont coudées et reliées respectivement à des premières extrémités de deux lignes droites d3 s'étendant entre les lignes droites d1 précitées. Les extrémités opposées d4 de ces lignes droites d3 sont reliées entre elles et forment sensiblement un U.

On constate en figure 3 que la boucle 222 a une forme différente et comprend des ondulations. Plus précisément, la boucle 222 comprend une première ligne ondulée e1 qui longe un bord longitudinal de la vertèbre et dont une extrémité est reliée à la borne 226, l'extrémité opposée e2 de cette ligne e1 étant coudée et reliée respectivement à une première extrémité d'une autre ligne ondulée e3 qui longe l'autre bord longitudinal de la vertèbre et dont l'extrémité opposée est reliée à la borne 228.

En variante, les boucles pourraient comprendre une multitude de lignes droites et parallèles de conducteur, qui seraient reliées entre elles en série. Chaque boucle pourrait par exemple être du type WWW, comportant plusieurs parties successives en W.

Les boucles de la vertèbre 118, 218 peuvent être différentes et sont par exemple configurées pour que les puissances dissipées dans les deux parties longitudinales de la vertèbre soient différentes.

Au moins une et de préférence chaque boucle 122, 124, 222, 224 comprend au moins une portion fusible F1, F2, F3 dont au moins l'un des critères parmi la section et le matériau du conducteur de cette boucle est différent de celui ou de ceux du conducteur du reste de la boucle.

Dans le cas de la figure 2, chaque boucle 122, 124 comprend au moins une portion fusible F1, F2 présentant une section transversale inférieure au reste de cette boucle. Les parties fusibles F1 de la boucle 122 ont chacune une largeur (mesurée dans le plan de la vertèbre) inférieure à celle du reste de la boucle 122. La portion fusible F2 de la boucle 124 a une épaisseur (non visible - mesurée dans un plan perpendiculaire à celui de la vertèbre) qui est inférieure à celle du reste de la boucle 124.

Le pilotage de la chauffe de l'élément chauffant peut s'effectuer grâce à un circuit électronique à modulation de largeur d'impulsions (ou PWM) lié à un capteur de température du véhicule ou de la vitesse du véhicule. Dans le cas où un capteur viendrait à donner une information erronée (véhicule à 150 km/h alors qu'il est à l'arrêt, température extérieure négative en plein été, etc.), le PWM pourrait activer une tension inappropriée (16V au lieu d'une tension réduite à l'arrêt du véhicule par exemple), ce qui entraînerait une très forte augmentation de la température.

On sait que la résistance d'un conducteur électrique est donnée par la formule : R = p.US (dans laquelle p est la résistivité, L la longueur et S la section), et que la puissance dissipée par effet joule est donnée par la formule P = R.I². Ainsi, on peut exprimer cette puissance dissipée par P = p.L/S.I². On comprend ainsi que la réduction de section d'un conducteur entraîne une augmentation de la puissance dissipée. La réduction de section du conducteur, dans la portion fusible F1, F2, est déterminée pour que cette portion fusible se rompe en cas de surchauffe du balai du fait de l'application de la tension précitée.

La fonction fusible est ici du type "électrique" car le fusible est intégré directement à l'élément chauffant (circuit résistif). La fusion d'une portion locale F1, F2, est recherchée sous l'effet de l'élévation de température provoquée par une surintensité. Le fusible électrique est irréversible puisqu'il y a fonte de la portion fusible et donc ouverture du circuit et coupure du passage de courant.

La ou les fonctions F1, F2 peuvent être situées aux extrémités longitudinales de la boucle correspondante. La boucle 122 comprend une fonction fusible F1 à chacune de ses extrémités longitudinales, et donc au niveau d'une extrémité libre de la vertèbre 118 et au niveau des bornes de connexion 126, 128. La boucle 124 comprend la fonction fusible F2 à une extrémité libre de la vertèbre 118.

En variante, les fusible F1, F2 et F3 pourraient se trouver à d'autres positions que les extrémités de la vertèbre.

Dans le cas de la figure 3, la boucle 222 comprend au moins une portion fusible F3 dont le matériau est différent de celui du reste de la boucle.

Selon un mode de réalisation, ce matériau est destiné à fondre lorsqu'il est soumis à une température prédéterminée, telle qu'une surchauffe du balai. Comme dans le cas précité, le fusible F3 est dans ce cas irréversible.

Dans l'exemple représenté, la boucle 222 comprend la fonction fusible F3 à une extrémité libre de la vertèbre 218.

## Revendications

1. Elément chauffant pour balai d'essuie-glace d'un véhicule, en particulier automobile, comprenant un circuit (120, 220) d'un conducteur électrique chauffant et un support (118, 218) de ce circuit, le circuit comportant au moins une boucle (122, 222) dont les extrémités sont reliées à des bornes (126, 128, 226, 228) d'alimentation électrique, **caractérisé en ce que** ladite au moins une boucle comprend au moins une portion fusible (F1, F2, F3) dont au moins l'un des critères parmi la section et le matériau du conducteur de cette boucle est différent de celui ou de ceux du conducteur du reste de la boucle.

2. Elément chauffant selon la revendication 1, **caractérisé en ce que** ladite au moins une portion fusible (F1, F2) a au moins une dimension transversale, telle qu'une largeur et/ou une épaisseur, qui est différente de celle ou de celles du conducteur du reste de la boucle.

3. Elément chauffant selon la revendication 1 ou 2, **caractérisé en ce que** ladite au moins une portion fusible (F3) est réalisée dans un matériau destiné à fondre lorsqu'il est soumis à une température prédéterminée.

4. Elément chauffant selon la revendication 1 ou 2, **caractérisé en ce que** ladite au moins une portion fusible (F3) est réalisée dans un matériau dont la résistance varie en fonction de la température à laquelle il est soumis.

5. Elément chauffant selon l'une des revendications précédentes, **caractérisé en ce qu'**au moins ledit reste de la boucle est réalisé en métal tel qu'en cuivre, en alliage cuivre-nickel, en laiton ou en aluminium.

6. Elément chauffant selon l'une des revendications précédentes, **caractérisé en ce que** le support (118, 218) a une forme allongée et comprend une surface longitudinale sensiblement plane, lesdites bornes (126, 128, 226, 228) étant situées sur cette surface et à distance des extrémités longitudinales du support.

7. Elément chauffant selon l'une des revendications précédentes, **caractérisé en ce que** les bornes (126, 128, 226, 228) sont situées dans une zone (Z) sensiblement médiane du support, qui s'étend par exemple de 30 à 70% de sa longueur, mesurée depuis l'une de ses extrémités longitudinales.

8. Elément chauffant selon la revendication 6 ou 7 **caractérisé en ce qu'**il comprend une première boucle (122, 222) qui s'étend depuis les bornes (126, 128, 226, 228) vers une des extrémités longitudinales du support (118, 218), et une seconde boucle (124, 224) qui s'étend depuis les bornes vers l'extrémité opposée du support.

9. Elément chauffant selon l'une des revendications précédentes, **caractérisé en ce qu'**au moins l'une des boucles (122, 124, 222, 224) a une forme générale en U ou en W.

10. Elément chauffant selon l'une des revendications précédentes, **caractérisé en ce qu'**au moins l'une des boucles (122, 124, 222, 224) comprend des ondulations.

11. Elément chauffant selon l'une des revendications précédentes, **caractérisé en ce que** le support est une vertèbre de cintrage (118, 218) du balai d'essuie-glace.

12. Balai d'essuie-glace pour un véhicule, en particulier automobile, comportant un élément chauffant selon l'une des revendications précédentes.

13. Balai d'essuie-glace selon la revendication 12, **caractérisé en ce que** l'élément chauffant forme une vertèbre de cintrage (118, 218).

14. Balai d'essuie-glace selon la revendication 12 ou 13, **caractérisé en ce qu'**il comprend des moyens de connexion à un bras d'entraînement du balai, ces moyens de connexion comportant des moyens de raccordement électrique aux bornes (126, 128, 226, 228) du circuit (120, 220) de l'élément chauffant.

## Patentansprüche

1. Heizelement für ein Scheibenwischerblatt eines Fahrzeugs, insbesondere eines Automobils, das einen Schaltkreis (120, 220) eines elektrischen Heizleiters und einen Halter (118, 218) dieses Schaltkreises beinhaltet, wobei der Schaltkreis mindestens eine Schleife (122, 222) beinhaltet, deren Enden mit Stromversorgungsanschlüssen (126, 128, 226, 228) verbunden sind, **dadurch gekennzeichnet, dass** die mindestens eine Schleife mindestens einen schmelzbaren Abschnitt (F1, F2, F3) beinhaltet, bei dem sich mindestens eines der Kriterien, zu denen der Querschnitt und der Werkstoff des Leiters dieser Schleife zählen, von dem oder denen des Leiters der restlichen Schleife unterscheidet.

2. Heizelement nach Anspruch 1, **dadurch gekennzeichnet, dass** der mindestens eine schmelzbare Abschnitt (F1, F2) mindestens eine Querschnittsabmessung wie etwa eine Breite und/oder eine Dicke aufweist, die sich von der oder denen des Leiters der restlichen Schleife unterscheidet.

3. Heizelement nach Anspruch 1 oder 2, **dadurch gekennzeichnet, dass** der mindestens eine schmelzbare Abschnitt (F3) aus einem Werkstoff hergestellt ist, der zum Schmelzen ausgelegt ist, wenn er einer vorgegebenen Temperatur ausgesetzt wird.

4. Heizelement nach Anspruch 1 oder 2, **dadurch gekennzeichnet, dass** der mindestens eine schmelzbare Abschnitt (F3) aus einem Werkstoff hergestellt ist, dessen Widerstand in Abhängigkeit von der Temperatur, der er ausgesetzt wird, variiert.

5. Heizelement nach einem der vorhergehenden Ansprüche, **dadurch gekennzeichnet, dass** mindestens die restliche Schleife aus einem Metall wie etwa Kupfer, einer Kupfer-Nickel-Legierung, Messing oder Aluminium hergestellt ist.

6. Heizelement nach einem der vorhergehenden Ansprüche, **dadurch gekennzeichnet, dass** der Halter (118, 218) eine gestreckte Form aufweist und eine im Wesentlichen ebene Längsfläche beinhaltet, wobei die Anschlüsse (126, 128, 226, 228) auf dieser Fläche und von den Längsenden des Halters beabstandet angeordnet sind.

7. Heizelement nach einem der vorhergehenden Ansprüche, **dadurch gekennzeichnet, dass** die Anschlüsse (126, 128, 226, 228) in einer im Wesentlichen mittleren Zone (Z) des Halters angeordnet sind, die sich, gemessen ab einem seiner Längsenden, beispielsweise von 30 bis 70% seiner Länge erstreckt.

8. Heizelement nach Anspruch 6 oder 7, **dadurch gekennzeichnet, dass** es eine erste Schleife (122, 222), die sich von den Anschlüssen (126, 128, 226, 228) zu einem der Längsenden des Halters (118, 218) erstreckt, und eine zweite Schleife (124, 224), die sich von den Anschlüssen zu dem gegenüberliegenden Ende des Halters erstreckt, beinhaltet.

9. Heizelement nach einem der vorhergehenden Ansprüche, **dadurch gekennzeichnet, dass** mindestens eine der Schleifen (122, 124, 222, 224) eine allgemein U- oder W-förmige Form aufweist.

10. Heizelement nach einem der vorhergehenden Ansprüche, **dadurch gekennzeichnet, dass** mindestens eine der Schleifen (122, 124, 222, 224) Wellen beinhaltet.

11. Heizelement nach einem der vorhergehenden Ansprüche, **dadurch gekennzeichnet, dass** der Halter eine Biegeleiste (118, 218) des Scheibenwischerblatts ist.

12. Scheibenwischerblatt für ein Fahrzeug, insbesondere ein Automobil, das ein Heizelement nach einem der vorhergehenden Ansprüche beinhaltet.

13. Scheibenwischerblatt nach Anspruch 12, **dadurch gekennzeichnet, dass** das Heizelement eine Biegeleiste (118, 218) bildet.

14. Scheibenwischerblatt nach Anspruch 12 oder 13, **dadurch gekennzeichnet, dass** es Mittel zur Verbindung mit einem Antriebsarm des Blatts beinhaltet, wobei diese Verbindungsmittel Mittel zum elektrischen Anschluss an die Anschlüsse (126, 128, 226, 228) des Schaltkreises (120, 220) des Heizelements beinhalten.

## Claims

1. Heating element for windscreen wiper for a vehicle, in particular a motor vehicle, including an electrical heating conductor circuit (120, 220) and a support (118, 218) of that circuit, the circuit including at least one loop (122, 222) the ends of which are connected to electrical power supply terminals (126, 128, 226, 228), **characterized in that** said at least one loop includes at least one fusible portion (F1, F2, F3) in which the section and/or the material of the conductor of that loop is different from that or those of the conductor of the rest of the loop.

2. Heating element according to Claim 1, **characterized in that** said at least one fusible portion (F1, F2) has at least one transverse dimension, such as a width and/or a thickness, that is different from that or those of the conductor of the rest of the loop.

3. Heating element according to Claim 1 or 2, **characterized in that** said at least one fusible portion (F3) is made of a material intended to melt if it is subjected to a predetermined temperature.

4. Heating element according to Claim 1 or 2, **characterized in that** said at least one fusible portion (F3) is made of a material the resistance of which varies as a function of the temperature to which it is subjected.

5. Heating element according to any one of the preceding claims, **characterized in that** at least said rest of the loop is made of metal such as copper, copper-nickel alloy, brass or aluminium.

6. Heating element according to any one of the preceding claims, **characterized in that** the support (118, 218) has an elongate shape and a substantially plane longitudinal surface, said terminals (126, 128, 226, 228) being situated on that surface and at a distance from the longitudinal ends of the support.

7. Heating element according to any one of the preceding claims, **characterized in that** the terminals (126, 128, 226, 228) are situated in a substantially median zone (Z) of the support that extends over 30 to 70% of its length, for example, as measured from one of its longitudinal ends.

8. Heating element according to Claim 6 or 7, **characterized in that** it includes a first loop (122, 222) that extends from the terminals (126, 128, 226, 228) toward one of the longitudinal ends of the support (118, 218) and a second loop (124, 224) that extends from the terminals toward the opposite end of the support.

9. Heating element according to any one of the preceding claims, **characterized in that** at least one of the loops (122, 124, 222, 224) has the general shape of a U or a W.

10. Heating element according to any one of the preceding claims, **characterized in that** at least one of the loops (122, 124, 222, 224) includes undulations.

11. Heating element according to any one of the preceding claims, **characterized in that** the support is a spine (118, 218) of the windscreen wiper.

12. Windscreen wiper for a vehicle, in particular a motor vehicle, including a heating element according to any one of the preceding claims.

13. Windscreen wiper according to Claim 12, **characterized in that** the heating element forms a spine (118, 218) for imparting a curvature.

14. Windscreen wiper according to Claim 12 or 13, **characterized in that** it includes means of connection to a driving arm of the wiper, said connecting means including means for electrical connection to the terminals (126, 128, 226, 228) of the circuit (120, 220) of the heating element.
